# EUROPEAN PATENT APPLICATION

(11) **EP 3 357 854 A1**
(43) Date of publication of application: **08.08.2018**
(21) Application number: 17197886.9
(22) Date of filing: 24.10.2017
(51) Int. Cl.: B66B 9/16

(54) **EXTENDABLE LOADING DEVICE AND CARRIER VEHICLE**

(30) Priority: 24.10.2016 BE 1600161
(71) Applicant: Florquin, Steve, 3924 Molenstede (BE)
(72) Inventor: Florquin, Steve, 3924 Molenstede (BE)
(74) Representative: Jacobs, Lambert

(57) **Abstract**

The invention relates to a loading ramp (1). Said loading ramp comprises a base (2), which can be mounted on a surface of the load compartment of a carrier vehicle, and at least two elongated bridge sections (4). Each elongated bridge section comprises a ramp (5) between two parallel side profiles (6). The side profiles (6) of the bridge sections engage such that a telescopically extendable bridge (3) is obtained which forms an elongated ramp in its extended state. The loading ramp further comprises a composite mechanical coupling (7) connecting a first end (8) of the bridge (3) in an engagement zone to the base (2). The composite mechanical coupling (7) allows a rotation of the bridge (3) around a first direction (Z) perpendicular to the tail lift, allows tilting of the bridge (3) around an axis of rotation (A) such that a second end (10) of the bridge (3) can move up and/or down in relation to the first direction (Z), and allows tilting of the rotational axis (A) around a second direction (B) perpendicular to the rotational axis (A) and the first direction (Z).

## Description

### Field of the invention

The present invention relates to the field of loading installations for carrier vehicles. In particular, this invention relates to an extendable loading ramp for mounting on a surface of the load compartment of a carrier vehicle and a carrier vehicle comprising such a loading ramp.

### Background of the invention

Carrier vehicles, for example, lorries with a fully enclosed load compartment, may be equipped with at least one tail lift for loading and unloading goods on the carrier vehicle. However, carrier vehicles, such as delivery vans, can also be equipped with a simple loading body without a tail lift.

A tail lift may, for example, consist of a back wall, or at least part of the back wall, of the load compartment, which is tiltably arranged around a horizontal axis in, or near, the ground plane of the load compartment. This makes it possible to, on the one hand, tilt the tail lift upwards and secure it so that the load compartment is closed in a transport configuration. On the other hand, it is possible to tilt the tail lift downwards until it touches the ground, to form an inclined plane in such a way that on one side a transition is formed to the ground plane of the load compartment and on the other side a transition to the ground.

It is known in the prior art that a tail lift can comprise both a tiltable element and a lifting device. For example, US patent application US 2016/0075270 describes a tail lift with a lift to shift a horizontal plane vertically between ground height and a height substantially similar to the base plane of the load compartment. In addition, a tiltable inclined plane allows goods to be loaded and unloaded via the side of the tail lift.

Telescopically extendable inclines for vehicles are also known in the field. For example, US patent US 5,077,852 describes telescopically extendable sections to form an inclined plane for loading vehicles onto a lorry. Such loading installations may, for example, be used in a pair for guiding the wheels of said vehicles at the transition from a ground plane to the base plane of the load compartment of the lorry, or vice versa.

Another example is given in US 5,813,071. Herein, a similar telescopically extendable installation is disclosed to form, in an extended configuration, an inclined plane capable of being walked upon. In this example, the extendable system, in a retracted configuration, can be stored completely under the load compartment, for example, within the limited space available in the existing chassis of the lorry.

### Summary of the invention

Embodiments of the present invention aim to allow good and efficient deliveries using a carrier vehicle, for example, a lorry.

The above-mentioned object is achieved by a system and carrier vehicle according to the present invention.

It is an advantage of embodiments of the present invention that goods can be delivered safely and cleanly, such as in the transport of fragile goods and goods requiring special attention during loading, securing and unloading. For example, it is an advantage that removals and/or deliveries of furniture and/or sanitary systems, such as kitchens, can be carried out without damaging and/or dirtying the goods to be delivered during the transfer between the carrier vehicle and the entrance of the building where the goods must be delivered.

It is an advantage of embodiments of the present invention that all manner of obstacles can be bridged between the load compartment of a lorry and an entrance of a building, such as a garage, door or window of a building. Such obstacles may include, for example, planting, hedges, utility ditches, mud, a canal and/or stairs. Such obstacles could pose a risk of damage, directly or indirectly, by requiring complex manipulation of the goods in circumventing these obstacles. Such obstacles can also pose a risk of fouling of the goods, and indirectly also of fouling the interior of the building where the goods are being delivered.

It is an advantage of embodiments of the present invention that it is possible to orient a bearing surface of a loading ramp in a selectable direction with respect to the longitudinal and transverse axis of the carrier vehicle, for example, to form a slope capable of being walked upon which does not necessarily extend only in the longitudinal direction or in the transverse direction of the vehicle.

It is an advantage of embodiments of the present invention that it is possible to drive goods, for example heavy cabinets, such as already assembled cabinets, from the truck to the building via a stable and clean bearing surface using a hand truck.

It is an advantage of embodiments of the present invention that it is possible to bridge a distance between a carrier vehicle and the entrance of a home with a heavily loaded hand truck, even if the condition of the intermediate ground does not permit this or permits this only with difficulty, for example, due to mud, the absence of a paved driveway and/or intermediate stairways.

It is an advantage of embodiments of the present invention that a hand truck can be used where otherwise the relevant goods would need to be manually carried and/or dragged.

It is an advantage of embodiments of the present invention that a hand truck can be used to deliver goods from a lorry to a home, without the tyres of the hand truck picking up dirt in the process, such as mud, which would soil the home.

It is an advantage of embodiments of the present invention that deliveries can be performed with an eye to promoting good ergonomics for the deliverers. For example, by allowing the use of hand trucks, an advantage in back ergonomics can be obtained. It is an additional advantage that in many situations, but not necessarily all situations, a bearing surface can be formed sloping evenly downward from the load compartment of a lorry to an entrance of a building by using embodiments of the present invention.

It is an advantage of embodiments of the present invention that a substantially vertical height difference between the load compartment of the lorry and the entrance of the building along which goods are to be delivered can be bridged, such as a height difference of at least one floor, e.g. one construction layer, such as a maximum bridgeable height difference in the range of 1 m to 10 m, preferably a maximum bridgeable height difference in the range of 2 m to 6 m, such as in the range of 2.5 m to 5 m, for example 3 m or 4 m.

Where height differences to be bridged for the delivery of goods of more than one floor are usually correctly indicated when ordering a transport, and therefore, if necessary, a moving lift can be used, it is remarkable that substantial differences in height, but corresponding to a difference in height of less than two floors, are often not indicated when ordering a transport, for example due to negligence or ambiguity as to what may or may not constitute a full floor above (or below) street level. It is an advantage of embodiments of the present invention that heavy goods do not need to be lifted or lowered manually.

It is a further advantage of embodiments of the present invention that a delivery from a lorry to a first floor of a building can be performed using a powered lift platform, for example in situations where there would not be enough space for a conventional removal lift, or where the ladder of a conventional removal lift cannot be placed steep enough to provide for the lowering of the unloaded load platform under the influence of gravity.

It is a further advantage of embodiments of the present invention that a delivery from a lorry to a first floor of a building can be performed without requiring a separate removal lift. For example, in an urban environment, the streets and/or alleys may only provide limited manoeuvring space for a lorry, for example with a length of 10 m or more. In such situations it is difficult to tow along a conventional removal lift, carried out as a trailer.

Furthermore, a lorry may typically follow a route with different delivery addresses being served consecutively. If a difference in height of only one floor has to be bridged at one address, a conventional solution, as known in the prior art, would require bringing along a removal lift, which typically can bridge up to 6 floors. Such a moving lift would therefore have to be disconnected at each stop along the route, in order to allow parking of the lorry and delivery from the load compartment, and need to be reconnected again after delivery.

It is a further disadvantage of conventional removal lifts, as known in the prior art, that such a lift is often difficult to prepare for use, and/or that setting up and dismantling it is time-consuming, for example about 15 minutes to set up and about 15 minutes to break down. This can therefore mean a substantial reduction in efficiency, where, for example, by using embodiments of the present invention, a delivery can be carried out, where, for example, a back and forth movement must be carried out three or four times between a first floor and street level, taking about 30 minutes in total, without any significant amount of time needing to be spent on installing and once again storing of the lift system.

It is an advantage of embodiments of the present invention that an extendable gangway is provided which can serve both as a bridge between a load compartment of a lorry and an entrance of a building, and as a removal lift for bridging a height difference from the load compartment to a higher located entrance, for example up to one level above street level.

It is an advantage of embodiments of the present invention that a system according to embodiments can be taken along in a lorry, for example, can be integrated into a lorry, and thus does not need to be towed behind the vehicle.

It is an advantage of embodiments of the present invention that a system according to embodiments does not need to be built up from different components for each use.

It is an advantage of a system according to embodiments of the present invention that it is compact and occupies only little space in the lorry.

In a first aspect, the present invention provides a loading ramp for mounting on a surface of a load compartment of a carrier vehicle. The loading ramp comprises a base adapted to be mounted on the surface of the load compartment of the lorry. The loading ramp further comprises at least two elongated bridge sections, each elongated bridge section comprising a surface capable of being walked upon between two parallel side profiles. The side profiles of the at least two elongated bridge sections engage in such a way that a telescopically extendable bridge is formed. The loading ramp further comprises a composite mechanical coupling connecting a first end of the telescopically extendable bridge in an engagement zone to the base. The composite mechanical coupling allows a rotation of the telescopically extendable bridge around a first direction perpendicular to the surface of the load compartment when the base is mounted on this surface. The composite mechanical coupling allows tilting of the telescopically extendable bridge around a rotational axis, in the engagement zone, such that a second end of the telescopically extendable bridge can move up and/or down relative to the first direction. The composite mechanical coupling also allows tilting of said axis of rotation around a second direction perpendicular to the rotational axis and the first direction. The surface capable of being walked upon is a gangway, so that the telescopically extendable bridge forms an extended gangway when extended.

'Gangway' means a continuous surface, for example a board or plate, or a grate. Such a grate comprises for example closely spaced support elements in one or two directions, for example interspersed in the longitudinal direction from the first end to the second end, as further described below, and/or intersecting support elements. The openings of such a grate can be sufficiently small to prevent the gangway's capacity to be walked and/or driven upon from being substantially reduced compared to a continuous plane. For example, in the longitudinal direction of the gangway, support elements of the grate may be spaced at a relative distance that is less than or equal to 20 cm, preferably at a distance in the range of 0 cm to 15 cm, preferably in the range of 0 cm to 6 cm, preferably in the range of 0 cm to 5 cm, preferably in the range of 0 cm to 4 cm.

In embodiments according to the present invention, the gangway can be corrugated, for example, comprising a corrugated sheet, such as a metal corrugated sheet. It is an advantage that a good grip can be provided on the gangway when it is walked or driven on, for example, in particular when the gangway is brought into an downwards or upwards inclined state.

In embodiments according to the present invention, the extended gangway may be adapted to be driven over with a hand truck to transport goods into and/or out of the carrier vehicle.

In embodiments according to the present invention, the two parallel side profiles may comprise C-shaped profiles, where one open end of one C-profile, i.e. formed by one end of the C-shape of the profile, is connected to a corresponding open end of the other C-profile by the surface capable of being walked upon.

In embodiments according to the present invention, the composite mechanical coupling can be adapted to smoothly slant the extended gangway downwards from the load compartment to an entrance of a building.

In embodiments according to the present invention, the composite mechanical coupling may be adapted, by means of the tilt around the second direction, to align the second end of the telescopically extendable bridge with a ground-contact surface where the telescopically extendable bridge should make contact with a ground surface at the entrance of the building, e.g. so that the telescopically extendable bridge makes contact with the ground surface.

In embodiments according to the present invention, the composite mechanical coupling may also be adapted to tilt the telescopically extendable bridge upwards so that a height difference from the load compartment to an upper entrance of the building can be bridged.

In a loading ramp according to embodiments of the present invention, said axis of rotation may be perpendicular to the longitudinal direction of the two side profiles of the at least two elongated bridge sections.

A loading ramp according to embodiments of the present invention may comprise a motor-driven winch for retracting and extending the telescopically extendable bridge.

A loading ramp according to embodiments of the present invention may comprise a direct current motor, where said driven winch can be driven by this direct current motor.

In a loading ramp according to embodiments of the present invention, said direct current motor may be adapted to operate with a supply voltage of 12V or 24V.

In a loading ramp according to embodiments of the present invention, the composite mechanical coupling may comprise a first coupling element which is directly mechanically connected to the base so that the first coupling element can freely rotate around the first direction relative to the base.

In a loading ramp according to embodiments of the present invention, the composite mechanical coupling may further comprise a second coupling element which is directly mechanically connected to the first coupling element such that the second coupling element can rotate around the second direction relative to the first coupling element.

In a loading ramp according to embodiments of the present invention, the second coupling element may be connected to the first coupling element by at least one articulated jack.

In a loading ramp according to embodiments of the present invention, the second coupling element may further be directly mechanically connected to the first end of the telescopically extendable bridge such that the telescopically extendable bridge can tilt around the rotational axis.

A loading ramp according to embodiments of the present invention may furthermore comprise a lifting arm for driving the rotation of the telescopically extendable bridge around the rotational axis.

In a loading ramp according to embodiments of the present invention, the parallel side profiles of the elongated bridge sections may be adapted to serve as guides for a ladder lift platform, e.g. to support and guide a ladder lift platform.

A loading ramp according to embodiments of the present invention may further comprise the ladder lift platform, the ladder lift platform being adapted to move along the side profiles longitudinally between the first end and the second end.

A loading ramp according to embodiments of the present invention may comprise a second motor-driven winch for lifting and lowering the ladder lift platform over the telescopically extendable bridge.

In a loading ramp according to embodiments of the present invention, the second motor-driven winch can be driven by a direct current motor.

A loading ramp according to embodiments of the present invention may further comprise one or more ramps to be placed over the composite mechanical coupling such that a transition is formed which is capable of being walked upon and/or trafficable between the load compartment of the carrier vehicle and the surface capable of being walked upon, when the loading ramp is mounted on the carrier vehicle's tail lift.

In a loading ramp according to embodiments of the present invention, the base can be adapted to be mounted on a carrier vehicle's tail lift, the carrier vehicle being a lorry.

In a loading ramp according to embodiments of the present invention, the base can be adapted to be mounted on the floor of a loading body of the carrier vehicle, the carrier vehicle being a delivery van.

In a second aspect, the present invention provides a carrier vehicle comprising a tail lift and a loading ramp according to embodiments of the first aspect of the present invention, said loading ramp being mounted on the tail lift.

In a carrier vehicle according to embodiments of the present invention, the loading ramp can be mounted on the inside of the tail lift.

The present invention also provides a delivery van comprising a loading body and a loading ramp according to embodiments of the first aspect of the present invention, the loading ramp being mounted on the floor of the loading body.

Particular and preferred aspects of the invention are set out in the accompanying independent and dependent claims. Features of the dependent claims may be combined with features of the independent claims and with features of other dependent claims as appropriate and not merely as explicitly set out in the claims.

### Brief description of the drawings

FIG. 1 shows a first schematic representation of a loading ramp according to embodiments of the present invention.
FIG. 2 shows a second schematic representation of a loading ramp according to embodiments of the present invention.
FIG. 3 shows a third schematic representation of a loading ramp according to embodiments of the present invention.
FIG. 4 shows a carrier vehicle according to embodiments of the present invention and a loading ramp according to embodiments of the present invention.
FIG. 5 shows two elongated bridge sections for a loading ramp according to embodiments of the present invention.
FIG. 6 shows a telescopically extendable bridge formed by two elongated bridge sections, for a loading ramp according to embodiments of the present invention.
FIG. 7 shows an illustrative composite mechanical coupling for a loading ramp according to embodiments of the present invention.
FIG. 8 shows a loading ramp according to embodiments of the present invention.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

### Detailed description of the embodiments

The present invention will be described with respect to particular embodiments and with reference to certain drawings but the invention is not limited thereto but only by the claims.

Reference throughout this specification to 'one embodiment' or 'an embodiment' means that a particular feature, structure or characteristic described in connection with the embodiment is included in at least one embodiment of the present invention. Thus, appearances of the phrases 'in one embodiment' or 'in an embodiment' in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, the terms 'first', 'second' and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms 'top', 'bottom', 'above', 'front' and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It should be noted that the term 'comprising', used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression 'a device comprising means A and B' should not be limited to devices consisting only of components A and B. It means that with respect to the present invention, the only relevant components of the device are A and B.

In the description provided herein, numerous specific details are set forth. However, it is understood that embodiments of the invention may be practised without these specific details. In other instances, well-known methods, structures and techniques have not been shown in detail in order not to obscure an understanding of this description.

The present invention relates to a loading ramp for mounting on a surface of the load compartment of a carrier vehicle, such as a surface that is substantially horizontally oriented or orientable when the vehicle is stationary on a horizontal plane. For example, the loading ramp can be adapted for mounting on a tail lift of a carrier vehicle or the floor of the load compartment of a carrier vehicle, for example on the floor of the loading body of delivery van.

Thus, in a first aspect, the present invention provides a loading ramp comprising a base, for example a base or base frame. This base is adapted to be mounted on the surface of the load compartment of the carrier vehicle, such as on a tail lift of a lorry or on the floor of a loading body of a delivery van.

The loading ramp further comprises at least two elongated bridge sections. Each elongated bridge section comprises a surface capable of being walked upon between two parallel side profiles. The side profiles of the at least two elongated bridge sections engage such that a telescopically extendable bridge is formed by the at least two elongated bridge sections. The surface capable of being walked upon is a gangway, so that the telescopically extendable bridge forms an extended gangway when extended.

The loading ramp further comprises a composite mechanical coupling connecting a first end of the telescopically extendable bridge in an engagement zone to the base. The composite mechanical coupling allows a rotation of the telescopically extendable bridge around a first direction perpendicular to the surface of the load compartment when the base is mounted on this surface. The composite mechanical coupling further allows tilting of the telescopically extendable bridge around a rotational axis in the engagement zone, such that a second end of the telescopically extendable bridge can move up and/or down relative to the first direction. The second end is different from the first end. These ends are located at opposite ends of the telescopically extendable bridge, when fully extended, and are spaced apart in the longitudinal direction of the elongated bridge sections, for example in the longitudinal direction of the side profiles.

The composite mechanical coupling further allows tilting of said rotational axis, in the engagement zone, around a second direction perpendicular to the rotational axis and the first direction.

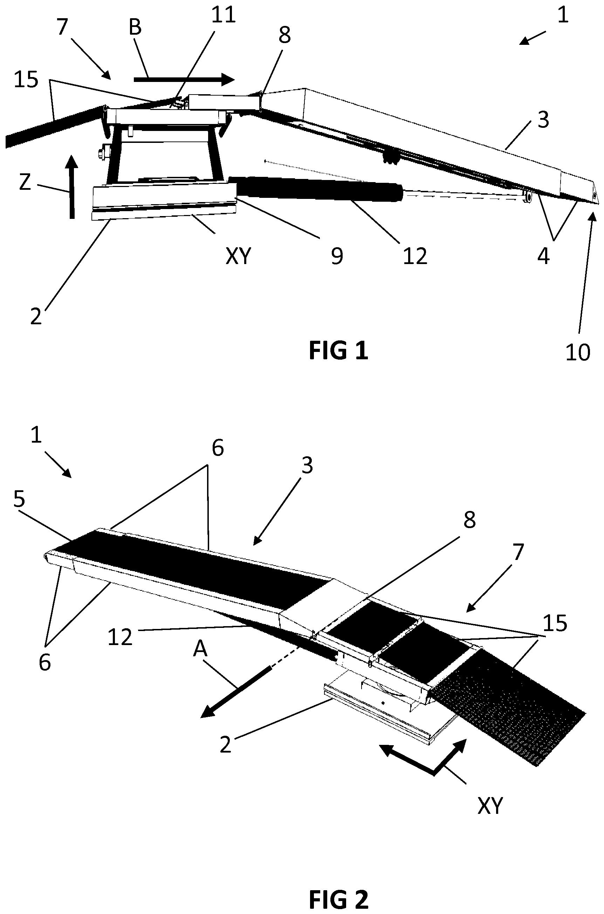

In FIG. 1 to FIG. 3, a loading ramp according to a possible embodiment of the present invention is shown. However, the present invention is not limited to such particular embodiment.

These images show a loading ramp 1 for mounting on a surface of a load compartment of a carrier vehicle, such as the tail lift of a lorry. For example, the loading ramp can be mounted or mountable on a tail lift that closes the load compartment of a lorry in a closed state, and gives access to this load compartment in an open state. For example, the loading ramp can be mounted or mountable on the floor of a loading body of a delivery van.

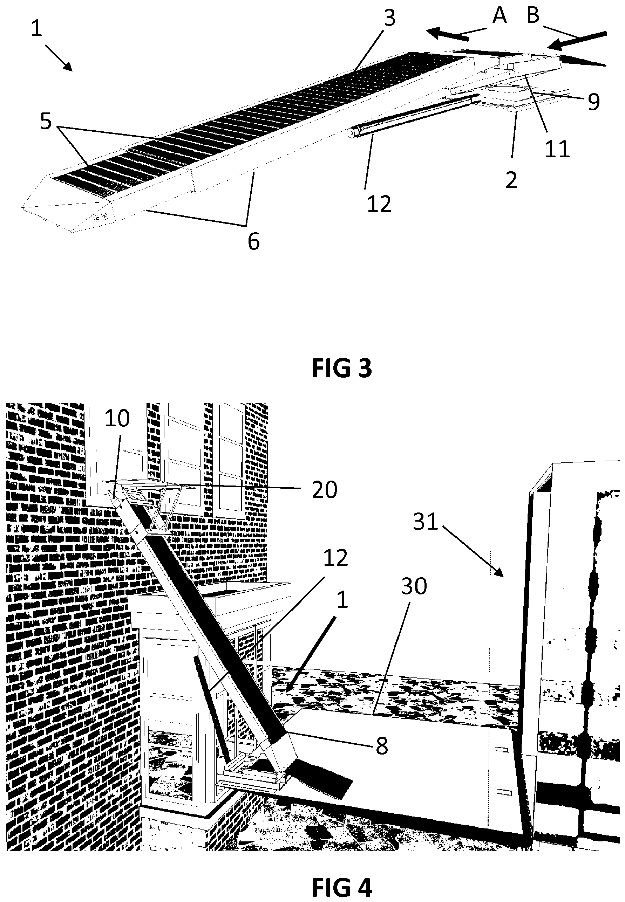

The loading ramp 1 comprises a base 2. This base can, for example, comprise a base or a base frame. The base 2 is adapted to be mounted on the surface of the load compartment of the carrier vehicle, such as on a loading ramp. The base 2 (and thus the loading ramp 1) may also already be mounted on the tail lift 30 of a carrier vehicle 31, as shown in FIG. 4. The base (and thus the loading ramp) may, for example, also already be mounted on the floor of a loading body of delivery van.

For example, the base may be adapted to be mounted on the inside of the tail lift, such that the complete loading ramp is stored inside the load compartment of the carrier vehicle if the tail lift is in a position to close the load compartment. Thus, this 'inside' may refer to the side of the tail lift facing the interior of the load compartment if the tail lift is in a closed state, and which can typically be facing substantially upward if the tail lift is in an open state. However, embodiments of the present invention are not necessarily limited to loading ramps mountable to such an inside of the tail lift, but may also comprise similar loading ramps with a base 2 mounted or mountable to the outside of the tail lift, i.e., on the surface of the tail lift opposite the above-mentioned inside. Such embodiments may have the advantage that the height difference of the extendable bridge, where it engages through the composite mechanical coupling, can be more easily reduced with respect to the floor of the load compartment, but on the other hand, may have the disadvantage that a greater force can work on the fastening of the loading ramp on the tail lift by a hanging down configuration of the base when the tail lift is in an open position, for example due to the lack of a supporting function of the contact surface on the outside of the tail lift when the device is mounted via this contact surface with respect to the weight of the loading ramp and any loads it is carrying.

Preferably, the base 2 is temporarily mountable, for example detachably mountable, on the surface of the load compartment, for example by means of a non-permanent anchorage. The base 2 can thus be adapted to be disconnected again after assembly from the surface, such as of the tail lift, and thus be transported separately, such as for instance flat on the floor or upright against a side wall of the load compartment. The loading ramp may, for example, comprise at least one wheel, and preferably two or more wheels, which are rotatably mounted or can be mounted on the base 2. The loading ramp can therefore, for example, comprise one or more detachable wheels to manipulate the loading ramp in the load compartment of a vehicle, for example to bring it from a storage position to an operational position. In this operational position, the base 2 can for example be anchored to the surface of the load compartment for use of the loading ramp. It is an advantage of such a disconnectable device that if the loading ramp is temporarily not needed, it can be easily removed in order to use the entire surface, for example the entire surface of the tail lift or the floor of the loading body, which would be limited with the mounted loading ramp.

Furthermore, if the loading ramp is not mounted, for example, if it has been disconnected, the surface can remain free from imperfections, so that this surface can be easily driven on using, for example, a pallet truck.

The base 2 can comprise attachment means to mount the base to the surface of the load compartment, such as screws, bolts, welded joints, fastening belts, ropes, chains, or similar attachment means known in the prior art. In particular, these attachment means can mechanically connect a base plane of the base 2 to the surface of the load compartment such that mutual displacement and/or rotation are preferably excluded as much as possible, for example substantially excluded, for example excluded.

The loading ramp further comprises at least two elongated bridge sections 4. Each elongated bridge section 4 comprises a surface capable of being walked upon 5 between two parallel side profiles 6. These two side profiles and the surface capable of being walked upon may be separate (but interconnected) components, but may also be integrally formed.

For example, the side profiles 6 can comprise C-shaped profiles, with one open end of the C-profile being connected by the surface capable of being walked upon 5, for example a gangway, such as an aluminium plate, with the corresponding open end of the other C-profile of the two parallel side profiles. However, embodiments of the present invention are not limited to this, and other telescopically extendable installations which form an extended gangway in their extended position, as known in the art, may be provided by other profile shapes of the side profiles 6 and/or other configurations of the side profiles with respect to the surface capable of being walked upon 5.

The side profiles 6 of the at least two elongated bridge sections engage such that a telescopically extendable bridge 3 is formed by the at least two elongated bridge sections. Preferably this telescopically extendable bridge 3 comprises a number of elongated bridge sections 4, which is in the range of 2 to 5, such as 3 bridge sections, or, preferably, 2 bridge sections.

The length of the elongated bridge sections, for example corresponding to the length of the side profiles, may preferably be in the range of 1.5 m to 4 m, preferably in the range of 2 m to 3 m, for example such that the loading ramp with retracted telescopically extendable bridge fits in the load compartment of the carrier vehicle when mounted on the inside of the tail lift.

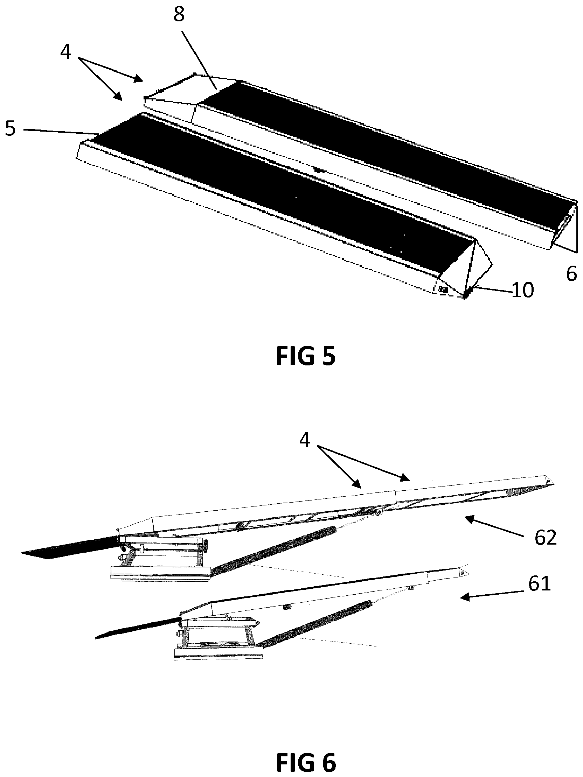

For example, FIG. 5 shows, separately, two elongated bridge sections 4 for a loading ramp according to embodiments of the present invention. FIG. 6 shows a telescopically extendable bridge formed by these two elongated bridge sections 4, in a retracted state 61 and an extended state 62. Where in some embodiments of the present invention, the telescopically extendable bridge is manually extendable, the loading ramp 1 according to embodiments of the present invention may also comprise a drive mechanism for retracting and/or extending the telescopically extendable bridge. For example, the loading ramp 1 can comprise a motor-driven winch for retracting and extending the telescopically extendable bridge. The loading ramp may comprise an electric direct current motor for driving said motor-driven winch, such as a 12V or 24V direct current motor. It is an advantage of such a direct current motor that it can easily be powered by the internal electric current network of the carrier vehicle, when the loading ramp is mounted on the surface of the load compartment of this carrier vehicle, for example by a standard plug-and-socket connection. However, in other embodiments of the present invention, the telescopically extendable bridge can also be retracted and/or extended by another actuator, such as for example a pneumatic or hydraulic system.

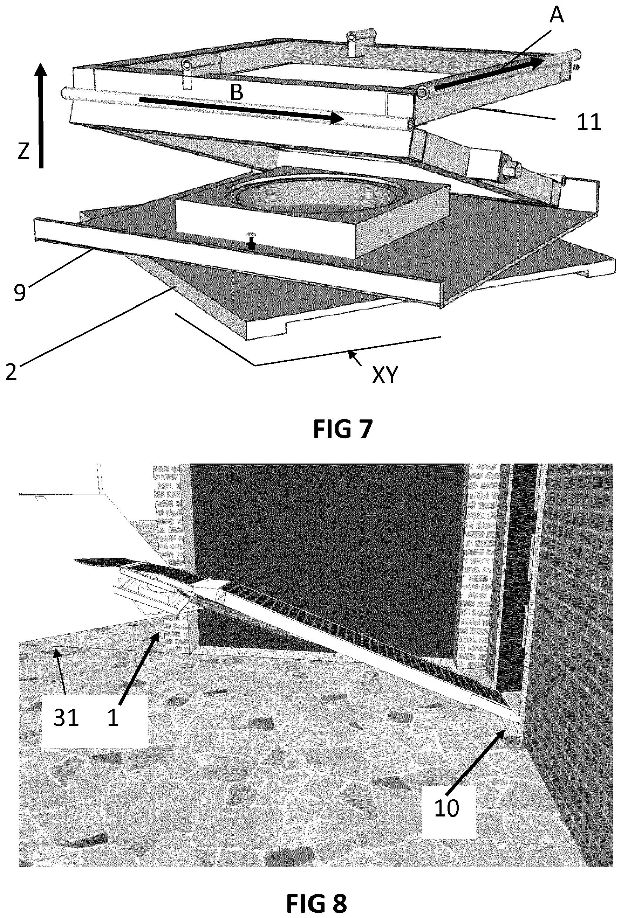

The loading ramp 1 further comprises a composite mechanical coupling 7, connecting a first end 8 of the telescopically extendable bridge, in an engagement zone thereof, to the base 2. FIG. 7 shows an illustrative composite mechanical coupling 7 and the base 2, in a loading ramp according to embodiments of the present invention. This illustrative composite mechanical coupling 7 is adapted to be connected to the telescopically extendable bridge, for example via a coupling on the rotational axis A.

Where reference is made to a 'composite mechanical coupling' in the present description, a set of mechanical parts is meant wherein this set provides for the degrees of freedom of movement described herein, for example a set of mechanical joints and/or couplings each providing at least one degree of freedom of rotation and/or translation.

The composite mechanical coupling 7 may comprise multiple mechanical joints to provide the degrees of freedom of movement as described below. Where specific examples are given in the following description and the figures, it is to be understood that other embodiments of the present invention do not necessarily relate to the same types of mechanical joints and/or the same sequence of stepwise interconnection of these mechanical joints. A person skilled in the art can, without engaging in any inventive step, replace the illustrative couplings and/or combination of couplings with alternatives to achieve the same result. Nevertheless, a particular example of sequence of coupling elements, a particular mechanical implementation of such a coupling element and/or other particular illustrative features of the composite mechanical coupling 7 may have the advantage of providing a robust and mechanically stable implementation of the composite mechanical coupling 7 relative to possible, obvious alternatives.

The composite mechanical coupling allows a rotation of the telescopically extendable bridge around a first direction Z perpendicular to the surface of the load compartment, when the base 2 is mounted on this surface. For example, this first direction Z may be perpendicular to a base plane of the base 2, where, after mounting the base on the surface of the load compartment, this base plane is mechanically connected to the surface of the load compartment in such a way, for example by fixing the base plane in contact with a surface of a tail lift, that mutual displacement and/or rotation between this base plane and the surface of the load compartment is preferably excluded as much as possible. By allowing this rotation around a direction perpendicular to the surface of the load compartment, via the loading ramp, in particular via the telescopically extendable bridge, equipment can be unloaded from the carrier vehicle, or equally, loaded onto the carrier vehicle, the end point of the trajectory followed over the telescopically extendable bridge with the material goods being in a selectable direction relative to the orientation of the carrier vehicle. Thus, where a conventional tail lift, optionally with a telescopically extendable inclined plane as known in the art, allows only loading and unloading of goods in one direction relative to the orientation of the vehicle, such as, for example, in a direction according to the longitudinal axis or the width of the vehicle, a loading ramp according to embodiments of the present invention can be configured for a selectable angle of the slope relative to the longitudinal axis of the vehicle.

Preferably, the composite mechanical coupling allows rotation of the telescopically extendable bridge around the first direction Z over at least an angle of 45°, with an order of preference for an angle of at least 90°, or even at least 180°, such as at least 270°. Preferably, this angle of rotation around the first direction Z is continuously adjustable, although in other embodiments the composite mechanical coupling may be adapted to provide a stepwise adjustable angle, such as in angular step increments in the range of 1° to 20° , for example in the range of 2° to 10°, for example in the range of 2.5° to 5°.

For example, the composite mechanical coupling 7 may comprise a first coupling element 9 which can freely rotate around the direction Z, and which is directly mechanically connected to the base 2. This may, for example, comprise a combination of a circular track, circular groove or circular motion guide which is fixedly arranged on either the first coupling element 9 or the base 2, and a corresponding element on the other coupling element or base, such as one or multiple wheels, one or more sliders, one or more complementary projections, a complementary groove and/or a complementary motion guide. For example, the first coupling element 9 may comprise a ball bearing, and a similar means for reducing the impact of frictional forces during rotation and/or dividing the pressure caused by the weight of the loading ramp on the base 2.

In embodiments of the present invention, the composite mechanical coupling 7 may comprise an actuator to drive this rotation around the direction Z, such as an electric motor. In other embodiments of the present invention, the composite mechanical coupling may be adapted to allow manual rotation around the direction Z. For example, one or more handles may be provided to facilitate the dragging of the telescopically extendable bridge around this first direction Z.

The composite mechanical coupling 7 further allows tilting of the telescopically extendable bridge 3 around a rotational axis A, in the engagement zone, such that a second end 10 of the telescopically extendable bridge 3 can move up and/or down with respect to the first direction Z, i.e. in which 'up' and 'down' refer to displacements with a substantial motion component in the first direction Z. The second end 10 is different from the first end 8. These ends 8, 10 are located on opposite ends of the telescopically extendable bridge 3, when it is fully extended, and the ends 8, 10 are spaced apart in the longitudinal direction of the elongated bridge sections, for example in the longitudinal direction of the side profiles.

The composite mechanical coupling 7 further allows tilting of the telescopically extendable bridge 3 around the rotational axis A, in the engagement zone, such that the second end 10 can be positioned both under the base 2, for example below the surface of the load compartment of the carrier vehicle when the base is mounted on it, and above the base 2, for example above the surface of the load compartment.

Where reference is made above to the rotational axis A, this does not necessarily refer to the presence of a spindle or physical axle, but only to a rotational axis in the mathematical and/or geometric sense. Nevertheless, a composite mechanical coupling according to embodiments of the present invention may indeed comprise a spindle or physical axle, parallel or coincident with the rotational axis A, to fully or partially provide the above-described tilting of the telescopically extendable bridge.

In particular, the rotational axis A in embodiments according to the present invention can be perpendicular to the longitudinal direction of the two side profiles 6 of the at least two elongated bridge sections. For example, near the first end 8, the side profiles may comprise a protrusion or opening such that the protrusions or openings on both side profiles engage corresponding openings or protrusions applied in or on the composite mechanical coupling. For example, near the first end 8, the side profiles may be interconnected by a spindle, which is arranged in an axle suspension of the composite mechanical coupling.

The composite mechanical coupling 7, for example the spindle and axle suspension, may be adapted to provide a rotation of the telescopically extendable bridge 3 around the rotational axis A between two extreme rotational states. In the first extreme rotational state, the telescopically extendable bridge 3 may be located at least partially below the base 2, for example below the surface of the load compartment of the carrier vehicle when the base is mounted on it. In the second extreme rotational state, the telescopically extendable bridge 3 may be located at least partially above the base 2, for example above the surface of the load compartment of the carrier vehicle when the base is mounted on it.

In the first extreme rotational state, the second end 10 of the telescopically extendable bridge 3 may be below the base 2, for example below the surface of the load compartment, and in the second extreme rotational state, the second end 10 of the telescopically extendable bridge 3 can be above the base 2, for example above the surface of the load compartment.

The composite mechanical coupling 7 may thus be adapted to provide an angle of rotation of the telescopically extendable bridge 3 in a range of -90° to +90°, for example in a range of -60° to +75°, for example in a range of -45° to +60°, for example in a range of -30° to 45°, the zero angle 0° referring to a reference plane in which the rotational axis A and the second direction B extend, for example a reference plane determined by a point on the rotational axis A and a normal vector perpendicular to both the second direction B and the rotational axis A.

The composite mechanical coupling 7 further allows tilting of said rotational axis A around a second direction B which is perpendicular to both the rotational axis A and the first direction Z. It is an advantage of providing this tilt around the second direction B that the second end 10 can be aligned with a ground-contact area where the telescopically extendable bridge should contact the ground, for example at an entrance of a building. In addition, this is particularly advantageous considering the many factors that would hinder such a favourable alignment without this degree of freedom from a tilt around the second direction B, such as a slope of the pavement where the carrier vehicle is stationed and/or an inclination of the tail lift which deliberately or incidentally does not correspond to a horizontal plane.

The composite mechanical coupling 7 may provide such a tilt of the rotational axis A around the second direction B over a limited angle with respect to a neutral reference state, for example such angle in the range of -45° to 45°, for example in the range of -30° to 30°, for example in the range of -20° to 20°, for example in the range of -10° to 10°.

The composite mechanical coupling 7 may further comprise a second coupling element 11 which is directly mechanically connected to the first coupling element 9. This second coupling element 11 can rotate around the second direction B relative to the first coupling element 9.

For example, the second coupling element 11 may be connected to the first coupling element 9 by at least one articulated jack, for example a pair of articulated jacks arranged in a parallel manner. Thus, the composite mechanical coupling may comprise at least one articulated jack, such as an electrically-powered articulated jack to tilt the second coupling element 11 relative to the first coupling element 9.

In other embodiments , the second coupling element 11 may be connected to the first coupling element by another type of lifting mechanism, such as a hydraulic or pneumatic lifting mechanism, or a manually powered lifting mechanism.

The second coupling element 11 may further be directly mechanically connected with the first end 8 of the telescopically extendable bridge 3 in the engagement zone such that the telescopically extendable bridge 3 can tilt around the rotational axis A.

The composite mechanical coupling 7 may further also be adapted to provide a displacement between the first end 8 of the telescopically extendable bridge and the base 2 in the second direction B, such as for example by providing a displacement between the second coupling element and the first coupling element in the second direction B. Without applying this displacement, i.e., by bringing together the first end 8 and the base 2 by means of this degree of freedom of displacement, the base, the first coupling element, the second coupling element and the first end can be located substantially above each other in the first direction Z, for example to provide a compact configuration when the loading ramp is not in use. However, by applying this displacement, i.e., by removing the first end 8 and the base 2 from each other by means of this degree of freedom of displacement, the loading ramp can have a limited height at the base 2 in the direction B. This limited height is for example substantially less than the sum of the heights of the first coupling element and the second coupling element. The references to 'heights' are here to be interpreted as distances as observed in the first direction Z. This has the advantage that a point next to the loading ramp, for example on the floor of the load compartment of the carrier vehicle, can be connected to the engagement zone of the telescopically extendable bridge by a softer slope, for example with a smaller angle of inclination, because the distance in the plane XY between this point and the engagement zone was increased by the displacement. A trafficable surface can thus be applied over these elements with a slight slope.

Preferably, this displacement can be provided over substantially the entire length of the base, for example by means of at least two elongated, parallel motion guides and corresponding shifting and/or rolling elements, such that both parts of the loading ramp can shift relative to each other.

The loading ramp 1 can further comprise a lifting arm 12 to drive the rotation of the telescopically extendable bridge 3 around the rotational axis A. For example, such a lifting arm may comprise a hydraulic cylinder with piston rod.

The lifting arm 12 may be adapted to provide the rotation of the telescopically extendable bridge 3 around the rotational axis A between the two extreme rotational states, as described above.

However, embodiments of the present invention are not limited to this, and the loading ramp may also comprise another type of actuator to drive the rotation of the telescopically extendable bridge 3 around the rotational axis A, such as a linear electric motor. However, it is an advantage of a hydraulic lifting arm that a relatively large load on the bridge 3 can be supported by the lifting arm, regardless of the angular position around the rotational axis A.

The loading ramp may further comprise one or more ramps 15 to be placed over the composite mechanical coupling 7, to thus provide a transition which is capable of being walked upon and/or trafficable between the load compartment of the carrier vehicle and the surface capable of being walked upon 5, when the loading ramp is mounted on the surface of the load compartment of the carrier vehicle.

It is an advantage of embodiments of the present invention that, due to the composite motion provided by the composite mechanical coupling, a relatively short, substantially rectilinear, slope capable of being walked upon can be formed to connect the load compartment of a vehicle to a point where goods are to be delivered or received, as shown in FIG. 8, regardless of a position of this point relative to the longitudinal axis (and/or transverse axis) of the vehicle, regardless of a height difference of this point relative to the level of the floor of the load compartment and in addition such that a third motion component can provide a stable positioning of the second end 10 on the ground in said point, by aligning the axis of rotation A with the ground. For example, contact with the ground in the second end 10 can be spread in the longitudinal direction of the telescopically extendable bridge. In particular advantageous embodiments of the present invention, the second end 10 may further be provided with means for improving a stable contact with the ground, such as for example wheels to prevent blockages of the second end 10 on imperfections of the ground, which could lead to a metastable equilibrium of the bridge.

The parallel side profiles 6 of the elongated bridge sections 4 may further be adapted to serve as guides for a ladder lift platform 20, as shown in FIG. 4.

The loading ramp may comprise such a ladder lift cage 20 adapted to move over the guides formed by the side profiles 6 in a direction between the first end 8 and the second end 10, and vice versa.

For example, the loading ramp can comprise a motor-driven winch, for example a second motor-driven winch, for raising and lowering the ladder lift platform 20 over the telescopically extendable bridge 3. This motor-driven winch can be powered by a direct current motor, such as a direct current motor adapted to operate at a supply voltage of 12V or 24V.

In a second aspect, the present invention also relates to carrier vehicle, as shown in FIG 4. This carrier vehicle 31 according to embodiments of the present invention comprises a tail lift 30 and a loading ramp 1 according to embodiments of the first aspect of the present invention. The carrier vehicle 31 can be a lorry, such as a lorry with a fully enclosable and/or lockable load compartment. The loading ramp 1 is mounted on the tail lift. The loading ramp 1 can be mounted on the inside of the tail lift 30. Other embodiments of the present invention relate to a delivery van which comprises a loading body and a loading ramp according to embodiments of the first aspect of the present invention, the loading ramp being mounted on the floor of the loading body.

The foregoing description details particular embodiments of the invention. It will be appreciated, however, that no matter how detailed the foregoing appears in text, the invention may be practised in many ways. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. A loading ramp (1) for mounting on a surface of the load compartment of a carrier vehicle, the loading ramp comprising:
- a base (2) adapted to be mounted on the surface of the load compartment of the carrier vehicle;
- at least two elongated bridge sections (4), each elongated bridge section comprising a surface capable of being walked upon (5) between two parallel side profiles (6), the side profiles (6) of the at least two elongated bridge sections engaging such that a telescopically extendable bridge (3) is formed, and
- a composite mechanical coupling (7) connecting a first end (8) of the telescopically extendable bridge (3) with the base (2) in an engagement zone,
the composite mechanical coupling (7) allowing a rotation of the telescopically extendable bridge (3) around a first direction (Z) perpendicular to the surface (XY) of the load compartment when the base is mounted on said surface (XY),
the composite mechanical coupling (7) allowing tilting of the telescopically extendable bridge (3) around a rotational axis (A) in the engagement zone such that a second end (10) of the telescopically extendable bridge (3) can move up and/or down relative to the first direction (Z),
the composite mechanical coupling (7) allowing tilting of said rotational axis (A) in the engagement zone around a second direction (B) perpendicular to the rotational axis (A) and the first direction (Z),
the surface capable of being walked upon (5) being a ramp, such that the telescopically extendable bridge (3) forms an extended ramp when extended.

2. The loading ramp according to claim 1, the extended ramp being adapted to being driven over with a hand truck to bring goods into and/or out of the carrier vehicle.

3. The loading ramp according to any of the previous claims, the two parallel side profiles (6) comprising C-shaped profiles, one open end of one C-profile being connected, by the surface capable of being walked upon (5), with a corresponding open end of the other C-profile of the two parallel side profiles.

4. The loading ramp according to any of the preceding claims, the composite mechanical coupling (7) being adapted to having the extended ramp slope evenly from the load compartment downwards up to an entrance of a building.

5. The loading ramp according to claim 4, the composite mechanical coupling (7) being adapted, by means of the tilt around the second direction (B), to aligning the second end (10) of the telescopically extendable bridge (3) with a ground-contact surface where the telescopically extendable bridge should make contact with a ground surface at the entrance of the building.

6. The loading ramp according to claim 4 or 5, the composite mechanical coupling (7) further being adapted to tilt the telescopically extendable bridge upwards so that a height difference from the load compartment to a higher located entrance of the building can be bridged.

7. The loading ramp according to any of the preceding claims, further comprising a motor-driven winch for retracting and extending the telescopically extendable bridge (3), and comprising a direct current motor, said driven winch being driven by said direct current motor.

8. The loading ramp according to any of the preceding claims, the composite mechanical coupling (7) comprising a first coupling element (9) which is directly mechanically connected with the base (2) such that the first coupling element (9) can freely rotate around the first direction (Z) relative to the base (2), the composite mechanical coupling (7) comprising a second coupling element (11) which is directly mechanically connected with the first coupling element (9) such that the second coupling element (11) can rotate around the second direction (B) relative to the first coupling element (9), and the second coupling element (11) being directly mechanically connected with the first end (8) of the telescopically extendable bridge (3) such that the telescopically extendable bridge (3) can tilt around the rotational axis (A).

9. The loading ramp according to claim 8, the second coupling element (11) being connected with the first coupling element (9) by at least one articulated jack.

10. The loading ramp according to claim 8 or 9, further comprising a lifting arm (12) for driving the rotation of the telescopically extendable bridge (3) around the rotational axis (A).

11. The loading ramp according to any of the preceding claims, the parallel side profiles (6) of the elongated bridge sections (4) being adapted to support and guide a ladder lift platform (20), the loading ramp comprising a second motor-driven winch for raising and lowering the ladder lift platform (20) over the telescopically extendable bridge (3).

12. The loading ramp of claim 11, further comprising the ladder lift platform (20), the ladder lift platform (20) being adapted to move over the side profiles (6) in a direction between the first end (8) and the second end (10).

13. The loading ramp according to any of the preceding claims, further comprising one or more ramps (15) to be placed over the composite mechanical coupling (7) such that a transition which is capable of being walked upon and/or trafficable is formed between the load compartment of the carrier vehicle and the surface capable of being walked upon (5), when the loading ramp (1) is mounted on the carrier vehicle's tail lift.

14. The loading ramp according to any of the preceding claims, the base (2) being adapted to being mounted on a tail lift or loading body of the carrier vehicle, the carrier vehicle being a lorry or a delivery van.

15. A carrier vehicle (31) comprising a tail lift (30) or a loading body and a loading ramp (1) according to any of the preceding claims, this loading ramp being mounted on an inside of the tail lift or on the floor of the loading body.
